# EUROPÄISCHE PATENTSCHRIFT

(11) **EP 0 986 275 B1**
(45) Veröffentlichungstag und Bekanntmachung des Hinweises auf die Patenterteilung: **09.09.2009**
(21) Anmeldenummer: 99810644.7
(22) Anmeldetag: 16.07.1999
(51) Int. Cl.: H04W 4/00, G07F 7/10, G07F 7/08

(54) **Verfahren zum Kaufen von Waren oder Dienstleistungen mit einem Mobiltelefon**
Method for purchasing goods or services with a mobile telephone
Procédé pour acheter des articles ou des services avec un téléphone mobile

(30) Priorität: 10.09.1998 CH 185298
(43) Veröffentlichungstag der Anmeldung: 15.03.2000
(73) Patentinhaber: Swisscom AG, 3050 Bern (CH)
(72) Erfinder: Stadelmann, Anton Niklaus, 3065 Bolligen (CH)
(74) Vertreter: BOVARD AG

(56) Entgegenhaltungen:
- WO-A-94/11849
- WO-A-96/13814
- WO-A-96/25828
- WO-A-97/04609
- WO-A-98/11519

## Beschreibung

Die vorliegende Erfindung betrifft ein Verfahren, um Waren oder Dienstleistungen mit einem Mobilfunktelefon, insbesondere mit einem GSM- oder UMTS-Mobilfunktelefon, zu bestellen und zu bezahlen.

Die vorliegende Erfindung kann beispielsweise für folgende Anwendungen respektive zur Bestellung und Bezahlung von folgenden Waren oder Dienstleistungen angewendet werden:
Lebensmittel, Kaufhausartikel, Öffentlicher Personennahverkehr (ÖPNV),
Personenverkehr (Taxi),
Hotelzimmer,
Eintrittskartenverkauf,
Öffentliche Telekommunikationsdienstleistungen,
Internet, Online-Dienste,
Nachrichten, Informationen, Radio- und DAB-Programme, ferngeladene Computerprogramme, Pay-TV,
uvm.

Verschiedene Verfahren sind schon bekannt, um Waren oder Dienstleistungen zu bestellen und zu bezahlen. Bargeld bietet kaum Sicherheit vor Betrug oder Diebstahl; ausserdem ist das Suchen nach passenden Münzen oft mühsam. Zahlungskarten (so genanntes Plastikgeld) finden daher eine immer grössere Akzeptanz. Sie können in drei Typen klassifiziert werden: Wertkarten (zum Beispiel Telefonkarten oder sogenannte E-Cash Karten), Debitkarten und Kreditkarten. Wertkarten mit einem Chip sind handlich, können aber gestohlen und von einem Dieb benutzt werden. Sie sind nicht persönlich und können meistens nicht gesperrt werden. Sie bieten daher weder grosse Sicherheit für den Kunden noch für den Dienstanbieter. Kreditkarten und Debitkarten sind einer bestimmten Person zugeordnet und führen zu einer nachträglichen Kontoabbuchung, weshalb sie auch Identifikations- oder Buchungskarten genannt werden. Der Kauf der Waren liegt bei ihnen immer vor deren Bezahlung. Bei Debitkarten wird jede einzelne Transaktion unverzüglich abgebucht; bei Kreditkarten werden alle Umsätze eines Monats addiert und am Ende des Monats abgebucht.

Wertkarten, Kreditkarten und Debitkarten können nur in Geschäften angewendet werden, die über entsprechende Händlerterminals verfügen. Viele Verkaufsstellen, zum Beispiel die meisten Kiosks, Parkplätze, Kinos, usw. haben jedoch keinen passenden Händlerterminal. Ausserdem werden oft unterschiedliche Terminals für unterschiedliche Karten von unterschiedlichen Finanzinstituten benötigt. Daher ist es zur Zeit nicht möglich, Transaktionen bei allen Verkaufsstellen mit Zahlungskarten durchzuführen, insbesondere nicht bei Verkaufsstellen, die nicht mit einem geeigneten Terminal ausgerüstet sind.

In der internationalen Anmeldung WO 96/13814 wird ein elektronisches Bezahlsystem beschrieben. Auf einem mobilen Terminal werden Bezahldaten erstellt und über ein Mobilfunknetz an eine Bezahlplattform übermittelt. Auf der Bezahlplattform werden die Bezahldaten ausgewertet und es wird eine auf den Bezahldaten und dem Sender der Bezahldaten basierte Umbuchung eines Geldbetrags zwischen dem Konto des Senders der Bezahldaten und dem Konto eines Geldbetragempfängers ausgelöst.

Ein Ziel der Erfindung ist daher ein elektronisches Transaktionsverfahren, das bei möglichst vielen Dienstanbietern angewendet werden kann.

Erfindungsgemäss wird dieses Ziel mit den Merkmalen des Anspruchs 1 erreicht, wobei bevorzugte Varianten in den Nebenansprüchen beschrieben sind.

Die vorliegende Erfindung wird mit Hilfe der als Beispiel gegebenen Beschreibung besser verständlich und durch die einzige beigelegte Figur veranschaulicht, die ein Blockschema zeigt, das den Informationsfluss in einem Telekommunikationssystem gemäss der Erfindung zeigt.

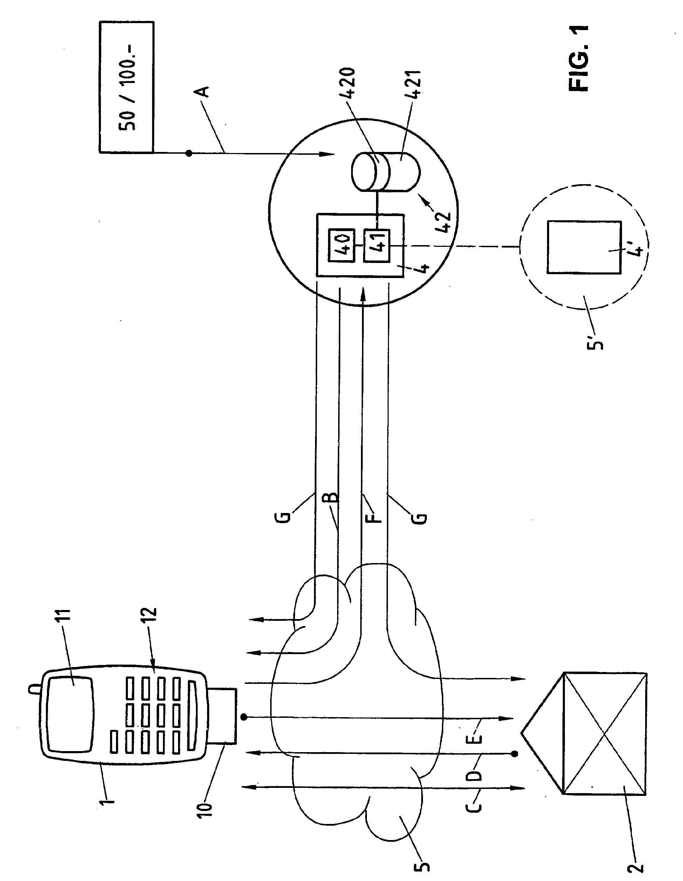

In der Folge wird mit Hilfe der Figur der Informationsfluss in einem erfindungsgemässen Telekommunikationssystem beschrieben. Der Kunde ist mit einem Mobilfunktelefon 1 ausgerüstet, das eine SIM-Karte 10 enthält, die ihn in einem Mobilfunknetz 5, zum Beispiel einem GSM- oder UMTS-Netz, identifiziert. Der Dienstanbieter 2 braucht ein nicht dargestelltes Terminal mit einer Datenverbindung zu einer Kurzmeldungsbetriebszentrale (SMSC) 41; das Terminal kann beispielsweise aus einem GSM- oder UMTS-Gerät bestehen. Das erfindungsgemässe System umfasst eine Vielzahl von Dienstanbietern, beispielsweise einige Hunderte oder Tausende von Dienstanbietern, und eine grössere Anzahl von (potentiellen) Kunden, beispielsweise einige Millionen von Kunden. Kunden und Dienstanbieter haben alle einen Vertrag mit dem Betreiber der Validationsplattform 42 abgeschlossen, der beispielsweise auch der Betreiber des Mobilfunknetzes 5 sein kann. Das Mobilfunknetz 5 umfasst ausserdem ein mit der Kurzmeldungsbetriebszentrale verbundenes GSM-Mobile Switching Center (MSC) 40. Die Kurzmeldungsbetriebszentrale 41 ist vorzugsweise, wie im Patent EP689368 im Namen der Anmelderin beschrieben, als SICAP-Platform realisiert. Eine andere Art von Kurzmeldungsbetriebszentrale 41, die andere Arten von Kurzmeldungen, beispielsweise USSD (Unstructured Supplementary Service Datas) oder E-Mails, empfangen und bearbeiten kann, kann aber auch im Rahmen dieser Erfindung angewendet werden.

Die Kurzmeldungsbetriebszentrale 41 führt eine Applikation 42 aus, beispielsweise eine SICAP-Applikation, um das erfindungsgemässe Verfahren durchzuführen. Die Applikation 42 kann auf dem selben Rechner als die Kurzmeldungsbetriebszentrale 41 ausgeführt werden, oder auf einem anderen Rechner, der mit dieser Zentrale 41 logisch verbunden ist. Sie umfasst ein Validierungsprogramm 420 zur Validierung von Bestellungen sowie eine Kundendatenbank 421. In der Folge wird die Applikation 42 deshalb Validierungsplattform genannt, unabhängig davon, ob es sich um einen speziell programmierten Rechner oder um ein Computerprogramm in der Zentrale 41 handelt. Die Validationsplattform 42 kann vom Betreiber der Kurzmeldungsbetriebszentrale 41 oder von einer anderen Organisation, beispielsweise von einem Finanzinstitut, betrieben werden; sie ist jedoch unabhängig vom Dienstanbieter 2 und wird nicht von ihm betrieben. Es können auch mehrere Validationsplattformen in einem Mobilfunknetz 5 oder sogar in einer einzigen Kurzmeldungsbetriebszentrale 41 vorhanden sein.

Um ein Produkt oder eine Dienstleistung vom Dienstanbieter 2 zu bestellen, muss der Kunde ein Geldkonto in der Kundendatenbank 421 errichten. Das Konto kann von irgendeinem Finanzinstintut verwaltet werden. Der Kunde kann via Bareinzahlung, Überweisung aus einem anderen Konto, Kauf von Wertkarten und Validierung im Konto, usw. einen beliebigen Betrag einer bestimmten Währung auf das Geldkonto einzahlen (Pfeil A). Der eingezahlte Betrag wird dem betreffenden Geldkonto in der Validationsplatform 421 gutgeschrieben. Mittels einer Kurzmeldung wird der einbezahlte Geldbetrag an die SIM-Karte 10 übertragen (Pfeil B) und in einem vom Kunden nicht veränderbaren Speicherbereich dieser Karte gespeichert. Vorzugsweise wird der Geldbetrag auch auf der Anzeige 11 des Mobilgeräts 1 angezeigt. Die Kurzmeldung B kann beispielsweise eine SMS- (Short-Message System) oder eine USSD-Meldung sein. Fall die SIM-Karte 10 WAP(Wireless Application Protocol)-tauglich ist, kann die Kurzmeldung auch eine E-Mail sein. Die Kurzmeldung wird vorzugsweise von der Validationsplatform 42 elektronisch signiert, verschlüsselt und authentifiziert, vorzugsweise gemäss dem TTP-Protokoll (Trusted Third Party).

Der Kunde muss dann die Anrufnummer des gewünschten Dienstanbieters 2 anwählen, um ein Produkt oder eine Dienstleistung dieses Anbieters zu bestellen. Mittels einer Kurzmeldung (SMS, USSD, E-Mail oder Fax), die beispielsweise mit den Eingabemitteln 12 des Mobilfunktelefons eingegeben wird, oder mündlich kann er dann einen Lieferauftrag an diesen Dienstanbieter erteilen (Pfeil C). Vorzugsweise wird (entweder vom Kunden oder vom Dienstanbieter) eine Kopie dieses Auftrages an die Validationsplattform 42 geschickt.

Der Kunde bekommt dann den für die angeforderte Dienstleistung oder das angeforderte Produkt verlangten Preis mündlich oder über eine Kurzmeldung (SMS, USSD oder E-mail) mitgeteilt (Pfeil D). Diese Mitteilung wird vorzugsweise automatisch von einem geeigneten System beim Dienstanbieter vorbereitet; sie kann auch andere Angaben des Dienstanbieters enthalten, zum Beispiel über Verfügbarkeit des Produktes, Lieferungszeit, Bedingungen usw. Eine Kopie dieser Mitteilung wird vorzugsweise an die Validationsplattform 42 über das Mobilfunknetz 5 zugeschickt.

Wenn er mit dem Preis und mit den Bedingungen einverstanden ist, kann der Kunde den Auftrag mit einer anderen Kurzmeldung (SMS, USSD oder E-mail) bestätigen (Pfeil E). Die Bestätigung enthält vorzugsweise alle Bestellungsdaten, die für die Bestellung benötigt werden, u.a. eine Identifizierung des Kunden (beispielsweise die IMSI, International Mobile Subscriber Identity, die in einem gesicherten Speicherbereich der SIM-Karte 10 abgelegt ist), des Dienstanbieters und des bestellten Produktes, den abgemachten Preis, die bestellte Menge, die Lieferadresse usw. Eine Kopie der Bestätigungskurzmeldung wird automatisch an die Validationsplattform 42 entweder vom Kunden oder vom Dienstanbieter kommuniziert (Pfeil F). Die Kopie wird entweder von einem entsprechenden Program, einem gesicherten Bereich der SIM-Karte 10 oder vom Terminal des Dienstanbieters vorbereitet. Ein Passwort kann von einer geeigneten Anwendung in der SIM-Karte 10 des Kunden für die Bestätigung verlangt werden. Ausserdem wird die Bestätigung vorzugsweise vom Kunden elektronisch signiert, verschlüsselt und authentifiziert, vorzugsweise gemäss dem TTP-Protokoll, vorzugsweise mit einem Programm und einem elektronischen Schlüssel, die in der SIM-Karte 10 gespeichert sind.

In einer Variante enthält die Kopie der Bestätigungsmeldung für die Validationsplattform 42 nur die Angaben, die für die Geldtransaktion nötig sind (Identifizierung vom Kunden, vom Dienstanbieter und Betrag), aber keine Angaben über den gekauften Dienst, das Produkt oder die Information, um die Privatsphäre des Kunden zu schützen.

Die Validationsplattform 42 empfängt dann die Bestätigungskurzmeldung und entschlüsselt sie (falls nötig). Die Daten werden vorzugsweise von der Validationsplattform 42, und nicht von der Kurzmeldungsbetriebebszentrale entschlüsselt (End-to-End Encryption). Auf diese Weise bleiben die übertragenen Bestellungsdaten auch gegenüber dem Betreiber der Zentrale 41 vertraulich (wenn dieser Betreiber nicht auch die Validationplattform betreibt). Die elektronische Signatur wird ausserdem gegebenenfalls geprüft. Falls diese Tests bestanden sind, prüft die Plattform 42 noch, ob der Auftrag aus Bonitätsgründen angenommen werden kann. Es wird beispielsweise die Solvenz des Kunden geprüft und ob der Betrag auf dem Geldkonto des identifizierten Kunden für die bestellte Menge ausreicht. Vorzugsweise wird ausserdem eine Schwarzliste in der Validationsplattform geprüft; wenn der Kunde in die Schwarzliste eingetragen ist, wird die Bestellung nicht angenommen, oder der Kunde wird aufgefordert, sich mit dem Betreiber der Validationsplattform 42 in Kontakt zu setzen.

Die Validationsplattform 42 kennt die Identifizierung des Dienstanbieters und den Betrag. Daher kann sie das gutzuschreibende Konto des Dienstanbieters bestimmen. Vom Kunden kennt sie die Identität durch Kundenidentifizierung (und gegebenenfalls PIN). Daher kann sie auch das zu belastende Kundenkonto bestimmen. Wenn alle Tests bestanden sind, wird der verlangte Betrag in der Validationsplattform dem betreffenden Konto abgezogen und auf das Konto des Dienstanbieters überwiesen. Das Konto des Dienstanbieters kann entweder vom Dienstanbieter, vom Kunden oder in einer Datenbank in der Validationsplattform 42 gespeichert werden; das Konto kann auch von einem anderen Finanzinstitut verwaltet werden. In diesem Fall wird eine Kommunikation zwischen der Validationsplattform 42 und dem externen Finanzinstitut aufgebaut. Der Kunde 1 und der Dienstanbieter erhalten beide eine automatisch vorbereitete, entsprechende Anzeige (Pfeile G), beispielsweise eine mündliche Bestätigung oder eine Kurzmeldung (SMS, USSD, E-Mail oder Fax). Vorzugsweise enthält diese Kurzmeldung auch eine Angabe über den neuen Kontostand des Kunden bzw. des Dienstanbieters (wenn das Konto des Dienstanbieters auch vom Betreiber der Validationsplattform betrieben wird). Der in der SIM-Karte 10 gespeicherte Geldbetrag wird entsprechend automatisch von einem entsprechenden Programm angepasst.

Falls die bestellte Dienstleistung eine Informationsabfrage ist, bekommt der Kunde diese Information vorzugsweise direkt auf sein Mobilgerät, beispielsweise als Sprachinformation aus einem Sprachserver vom Dienstanbieter 2, oder mit einer Kurzmeldung (SMS, USSD, E-Mail, DAB-Programbegleitende Nachrichten, usw.), die direkt auf der Anzeige 11 angezeigt wird und/oder von einer entsprechenden Anwendung in der SIM-Karte ausgeführt wird. Falls die bestellte Ware ein Produkt ist, wird dieses Produkt an den verlangten Ort geliefert. Die Lieferadresse kann beispielsweise ein Teil der Bestelldaten sein oder aus der IMSI des anrufenden Kunden hergeleitet werden.

Der Fachmann wird verstehen, dass das erfindungsgemässe Bestellungsverfahren auch für Bestellungen im Ausland geeignet ist. In diesem Fall werden die verschiedenen Meldungen, die für die Validationsplattform 42 bestimmt sind, an eine andere Kurzmeldungsbetriebszentrale 4' im entsprechenden öffentlichen Mobilfunknetz (VPLMN) 5' über normale Roamingprozeduren weitergeleitet.

## Patentansprüche

1. Transaktionsverfahren, um Waren oder Dienstleistungen mit einem Mobilfunktelefon (1) zu bestellen und zu bezahlen, wobei ein Lieferauftrag über ein Mobilfunknetz (5) von einem Kunden direkt an ein System bei einem Dienstanbieter (2) übertragen wird, **dadurch gekennzeichnet,**
**dass** dem Lieferauftrag entsprechende Bestellungsdaten, in welchen mindestens ein Geldbetrag angegeben ist, in einer oder mehreren Kurzmeldungen verpackt und an eine mit einer Kurzmeldungsbetriebszentrale (41) verbundene Validationsplattform (42) übermittelt werden,
und **dass** aufgrund einer Überprüfung der Bestellungsdaten durch die Validationsplattform (42) der mindestens eine Geldbetrag einem Geldkonto des Kunden abgezogen und auf ein Geldkonto des Dienstanbieters überwiesen wird.

2. Transaktionsverfahren gemäss Anspruch 1, **dadurch gekennzeichnet, dass** die Kurzmeldungen SMS-Meldungen sind.

3. Transaktionsverfahren gemäss Anspruch 1, **dadurch gekennzeichnet, dass** die benannten Kurzmeldungen USSD-Meldungen sind.

4. Transaktionsverfahren gemäss Anspruch 1, **dadurch gekennzeichnet, dass** das Mobilfunktelefon (1) WAP-fähig ist, und dass die benannten Kurzmeldungen E-Mails sind.

5. Transaktionsverfahren gemäss Anspruch 1, **dadurch gekennzeichnet, dass** die benannten Kurzmeldungen vom Kunden elektronisch signiert werden.

6. Transaktionsverfahren gemäss einem der vorhergehenden Ansprüche, **dadurch gekennzeichnet, dass** die benannte Validationsplattform (42) eine Bestätigung an den Kunden und/oder an den Dienstanbieter (2) übermittelt.

7. Transaktionsverfahren gemäss einem der vorhergehenden Ansprüche, **dadurch gekennzeichnet, dass** die Bestellungsdaten eine Dienstanbieteridentifizierung umfassen.

8. Transaktionsverfahren gemäss einem der vorhergehenden Ansprüche, **dadurch gekennzeichnet, dass** mindestens gewisse vom Dienstanbieter eingegebene Bestellungsdaten mit Kurzmeldungen an das Mobilfunktelefon (1) des Kunden übertragen und dort angezeigt werden.

9. Transaktionsverfahren gemäss dem vorhergehenden Anspruch, **dadurch gekennzeichnet, dass** die vom Verkäufer eingegebenen und mit Kurzmeldungen an das Mobilfunktelefon übertragenen Bestellungsdaten eine Betragsangabe umfassen.

10. Transaktionsverfahren gemäss einem der vorhergehenden Ansprüche, **dadurch gekennzeichnet, dass** mindestens gewisse vom Kunden eingegebene Transaktionsdaten vom Kunden mit Eingabemitteln (12) des Mobilfunktelefons (1) eingetippt werden.

11. Transaktionsverfahren gemäss einem der vorhergehenden Ansprüche, **dadurch gekennzeichnet, dass** mindestens gewisse vom Kunde eingegebene Transaktionsdaten aus einem Speicherbereich einer SIM-Karte (10) des Mobilfunktelefons (1) gewonnen werden.

12. Transaktionsverfahren gemäss dem vorhergehenden Anspruch, **dadurch gekennzeichnet, dass** die aus dem benannten Speicherbereich gewonnenen Bestellungsdaten mindestens die Kundenidentifizierung umfassen.

13. Transaktionsverfahren gemäss dem vorhergehenden Anspruch, **dadurch gekennzeichnet, dass** die benannte Kundenidentifizierung die IMSI ist.

14. Transaktionsverfahren gemäss einem der vorhergehenden Ansprüche, **dadurch gekennzeichnet, dass** der Stand des Geldkontos des Kunden in der Validationsplattform in einem Speicherbereich der SIM-Karte (10) des Kunden gespeichert wird.

15. Transaktionsverfahren gemäss dem vorhergehenden Anspruch, **dadurch gekennzeichnet, dass** der in der SIM-Karte gespeicherte Kontostand nach Ende des Transaktionsverfahrens von der Validationsplattform aktualisiert wird.

16. Transaktionsverfahren gemäss einem der vorhergehenden Ansprüche, **dadurch gekennzeichnet, dass** der Lieferauftrag eine Informationsabfrage ist, die über das Mobilfunknetz (5) an das Mobilfunktelefon (1) des Kunden übertragen wird.

17. Transaktionsverfahren gemäss dem vorhergehenden Anspruch, **dadurch gekennzeichnet, dass** die benannte Information mit einem Sprachserver synthetisiert und über den Nutzkanal an den Kunden übertragen wird.

18. Transaktionsverfahren gemäss dem Anspruch 16, **dadurch gekennzeichnet, dass** die benannte Information mittels Kurzmeldungen übertragen wird.

19. Transaktionsverfahren gemäss dem Anspruch 16, **dadurch gekennzeichnet, dass** die benannte Information mittels E-Mail übertragen wird.

20. Transaktionsverfahren gemäss einem der Ansprüche 18 oder 19, **dadurch gekennzeichnet, dass** die benannte Information ein Computer-Programm umfasst.

21. Transaktionsverfahren gemäss einem der vorhergehenden Ansprüche, **dadurch gekennzeichnet, dass** mindestens gewisse Bestellungsdaten über den ganzen Weg zwischen dem Kunden und der Validationsplattform (42) verschlüsselt sind.

22. Transaktionsverfahren gemäss einem der vorhergehenden Ansprüche, **dadurch gekennzeichnet, dass** Bestellungsdaten an mehrere Validationsplattformen übermittelt werden.

23. Transaktionsverfahren gemäss einem der vorhergehenden Ansprüche, **dadurch gekennzeichnet, dass** Bestellungsdaten an Validationsplattformen in anderen Ländern geleitet werden.

## Claims

1. Transaction method for ordering and paying for goods or services using a mobile radio telephone (1), a delivery order being transmitted directly from a customer via a mobile radio network (5) to a system at a service provider (2), **characterised**
**in that** order data corresponding to the delivery order, in which data at least one monetary amount is indicated, are packed in one or more short messages and are transmitted to a validation platform (42) connected to a short message operating centre (41),
and **in that**, based on a verification of the order data by the validation platform (42), the at least one monetary amount is deducted from a financial account of the customer and is remitted to a financial account of the service provider.

2. Transaction method according to claim 1, **characterised in that** the short messages are SMS messages.

3. Transaction method according to claim 1, **characterised in that** said short messages are USSD messages.

4. Transaction method according to claim 1, **characterised in that** the mobile radio telephone (1) WAP-capable, and **in that** said short messages are e-mails.

5. Transaction method according to claim 1, **characterised in that** said short messages are electronically signed by the customer.

6. Transaction method according to one of the preceding claims, **characterised in that** said validation platform (42) transmits a confirmation to the customer and/or to the service provider (2).

7. Transaction method according to one of the preceding claims, **characterised in that** the order data include a service provider identification.

8. Transaction method according to one of the preceding claims, **characterised in that** at least certain of the order data entered by the service provider are transmitted with short messages to the mobile radio telephone (1) of the customer and are displayed there.

9. Transaction method according to the preceding claim, **characterised in that** the order data entered by the vendor and transmitted with short messages to the mobile radio telephone include indications of amount.

10. Transaction method according to one of the preceding claims, **characterised in that** at least certain of the transaction data entered by the customer are typed in by the customer using input means (12) of the mobile radio telephone (1).

11. Transaction method according to one of the preceding claims, **characterised in that** at least certain transaction data entered by the customer are obtained from a memory area of an SIM card (10) of the mobile radio telephone (1).

12. Transaction method according to the preceding claim, **characterised in that** the order data obtained from said memory area comprise at least the customer identification.

13. Transaction method according to the preceding claim, **characterised in that** said customer identification is the IMSI.

14. Transaction method according to one of the preceding claims, **characterised in that** the balance of the financial account of the customer in the validation platform is stored in a memory area of the SIM card (10) of the customer.

15. Transaction method according to the preceding claim, **characterised in that** the account balance stored in the SIM card is updated by the validation platform after completion of the transaction method.

16. Transaction method according to one of the preceding claims, **characterised in that** the delivery order is an information query which is transmitted via the mobile radio network (5) to the mobile radio telephone (1) of the customer.

17. Transaction method according to the preceding claim, **characterised in that** said data are synthesized with a speech recognition server and are transmitted over the user information channel to the customer.

18. Transaction method according to claim 16, **characterised in that** said data are transmitted by means of short messages.

19. Transaction method according to claim 16, **characterised in that** said data are transmitted by means of e-mail.

20. Transaction method according to one of the claims 18 or 19, **characterised in that** said data comprise a computer program.

21. Transaction method according to one of the preceding claims, **characterised in that** at least certain order data are encrypted over the entire route between the customer and the validation platform (42).

22. Transaction method according to one of the preceding claims, **characterised in that** order data are transmitted to a plurality of validation platforms.

23. Transaction method according to one of the preceding claims, **characterised in that** order data are transmitted to validation platforms in other countries.

## Revendications

1. Procédé de transaction pour acheter ou payer des articles ou services avec un téléphone mobile (1), un ordre de fourniture étant transmis par un réseau de radiotéléphonie mobile (5) d'un client directement à un système d'un fournisseur de services (2), **caractérisé en ce que**
des données de commande correspondant à l'ordre de fourniture dans lesquelles au moins une somme d'argent est indiquée, sont emballées dans un ou plusieurs messages courts et sont transmises à une plateforme de validation (42) reliée à une centrale de services de messages courts (41),
et **en ce que** sur la base d'une vérification des données de commande par la plateforme de validation (42) au moins une somme d'argent est déduite d'un compte bancaire du client et est virée sur un compte bancaire du fournisseur de services.

2. Procédé de transaction selon la revendication 1, **caractérisé en ce que** les messages courts sont des messages SMS (textos ou télémessages)

3. Procédé de transaction selon la revendication 1, **caractérisé en ce que** les dits messages courts sont des messages USSD (Unstructured Supplementary Service Data = Données de Services Supplémentaires peu Structurée).

4. Procédé de transaction selon la revendication 1, **caractérisé en ce que** le téléphone mobile (1) est compatible WAP et **en ce que** les dits messages courts sont des courriers électroniques dits Emails.

5. Procédé de transaction selon la revendication 1, **caractérisé en ce que** lesdits courts messages sont signés électroniquement par le client.

6. Procédé de transaction selon l'une des revendications précédentes, **caractérisé en ce que** ladite plateforme de validation (42) transmet une confirmation aux clients et/ou au fournisseur de services (2).

7. Procédé de transaction selon l'une des revendications précédentes, **caractérisé en ce que** les données de commande comprennent une identification de fournisseurs de services.

8. Procédé de transaction selon l'une des revendications précédentes, **caractérisé en ce qu'**au moins certaines données de commande saisies par le fournisseur de services sont transmises et affichées par le biais de messages courts sur le téléphone mobile (1) du client.

9. Procédé de transaction selon l'une des revendications précédentes, **caractérisé en ce que** les données de commande saisies par le vendeur et transmises par des messages courts au téléphone mobile comprennent une indication de montant.

10. Procédé de transaction selon l'une des revendications précédentes, **caractérisé en ce qu'**au moins certaines données de transaction saisies par le client sont entrées par des moyens de saisie (12) du téléphone mobile (1).

11. Procédé de transaction selon l'une des revendications précédentes, **caractérisé en ce qu'**au moins certaines données de transaction saisies par le client sont extraites à partir d'une zone de stockage d'une carte SIM (10) du téléphone mobile (1).

12. Procédé de transaction selon l'une des revendications précédentes, **caractérisé en ce que** les données de commande extraite de ladite zone de stockage comprennent au moins l'identification de client.

13. Procédé de transaction selon l'une des revendications précédentes, **caractérisé en ce que** ladite identification de client est l'IMSI.

14. Procédé de transaction selon l'une des revendications précédentes, **caractérisé en ce que** l'état du compte bancaire du client est stocké dans la plateforme de validation dans une zone de stockage de la carte SIM (10) du client.

15. Procédé de transaction selon l'une des revendications précédentes, **caractérisé en ce que** l'état du compte stocké dans la carte SIM est actualisé à la fin du procédé de transaction par la plateforme de validation.

16. Procédé de transaction selon l'une des revendications précédentes, **caractérisé en ce que** l'ordre de fourniture est une requête d'information qui est transmise par le réseau de radiotéléphonie mobile (5) au téléphone mobile (1) du client.

17. Procédé de transaction selon l'une des revendications précédentes, **caractérisé en ce que** ladite information est synthétisée par un serveur vocal et est transmise au client par le canal utile.

18. Procédé de transaction selon la revendication 16, **caractérisé en ce que** ladite information est transmise par des messages courts.

19. Procédé de transaction selon la revendication 16, **caractérisé en ce que** ladite information est transmise par courrier électronique (Email).

20. Procédé de transaction selon l'une des revendications 18 ou 19, **caractérisé en ce que** ladite information comprend un programme informatique.

21. Procédé de transaction selon l'une des revendications précédentes, **caractérisé en ce que** certaines données de commande sont cryptées sur tout le trajet entre le client et la plateforme de validation (42).

22. Procédé de transaction selon l'une des revendications précédentes, **caractérisé en ce que** des données de commande sont transmises à plusieurs plateformes de validation.

23. Procédé de transaction selon l'une des revendications précédentes, **caractérisé en ce que** des données de commandes sont envoyées à des plateformes de validation dans d'autres pays.
